# EUROPEAN PATENT SPECIFICATION

(11) **EP 4 240 657 B1**
(45) Date of publication and mention of the grant of the patent: **22.04.2026**
(21) Application number: 21890156.9
(22) Date of filing: 05.11.2021
(51) Int. Cl.: A23K 50/20, B65B 1/46, B65B 7/16, B65B 25/00, B65B 57/16, B65B 61/06, B65B 61/26, B65B 61/28, B65B 35/24, B65B 11/02, B65B 11/10

(54) **METHOD FOR PRODUCING PACKAGED EDIBLE MATERIALS**
VERFAHREN ZUR HERSTELLUNG VERPACKTER ESSBARER MATERIALIEN
PROCÉDÉ DE FABRICATION DE MATIÈRES COMESTIBLES EMBALLÉES

(30) Priority: 05.11.2020 US 202063110319 P
(43) Date of publication of application: 13.09.2023
(73) Proprietor: Smartpak Equine LLC, Plymouth, MA 02360 (US)
(72) Inventor: CORBY, Dodd, Plymouth, MA 02360 (US); WILSON, Kevin, Plymouth, MA 02360 (US); MINARD, Rebecca, Plymouth, MA 02360 (US)
(74) Representative: Forstmeyer, Dietmar
(86) International application number: PCT/US2021/058269
(87) International publication number: WO 2022/099019

(56) References cited:
- EP-A1- 3 241 540
- WO-A1-2019/016276
- AU-B2- 2016 247 481
- US-A- 4 655 026
- US-A1- 2004 151 760
- US-A1- 2007 187 281
- US-A1- 2007 187 281
- US-A1- 2007 270 998
- US-A1- 2008 312 957
- US-A1- 2010 232 570
- US-A1- 2012 290 129
- US-B1- 6 493 641

## Description

### TECHNICAL FIELD

The present disclosure relates generally to a method for producing packaged edible materials, and more particularly, to a method for producing sealed, packaged edible materials with increased efficiency.

### BACKGROUND

Generally, manufacturers of commercial horse feed add vitamins and minerals to processed grain. The amounts of nutritional additives are targeted toward the average horse. Many horse owners, trainers and veterinarians believe that further nutritional supplementation is beneficial for horses in active training, competition, those with health problems, or those who fall in some general demographic groups (older, pregnant, etc.). Nutritional supplements can consist of vitamins, minerals, amino acids, proteins, herbs, oils, etc., and are intended to provide additional nutritive support for the horse. In addition to supplements, various additives may also be routinely added to equine feed.

Many supplements are marketed in bulk containers in airtight seals to maintain freshness and potency. Such bulk containers present various difficulties in administering supplements. For example, the supplements need to be precisely measured for each horse, a time-consuming process. This increases the risk over or under dosing the horse due to error in measuring. A particular horse's supplements may also vary by day or time of year thus further complicating the feeding process.

Various systems have been developed to simplify the supplement feeding process. For example, various single dose containers have been developed. However, these individually manufactured pods are costly and time consuming to produce. Thus, there is a need to develop a more efficient manufacturing process for pods containing supplements. US 2010/232570 A1 discloses a method for producing packaged edible materials comprising selecting an edible material and amount thereof, dispensing the edible materials to a packaging unit that comprises multiple pods and analysing the packaging unit that contains the edible material and sealing the pods with lidding material.

### SUMMARY

The present disclosure provides a method for producing packaged edible materials that are sealed and include identifying information thereon. The method also provides an improved stacking order of multiple packages to reduce overall sizing. The produced packages protect the edible material from air, water, and light while the outside of the packages is capable of being printed on to provide customizable information.

According to one aspect the present disclosure provides a method for producing packaged edible materials that includes selecting one or more edible materials and an amount thereof based on a purchaser's input and separately dispensing each of the edible materials to a packaging unit that comprises multiple pods. Additionally, the method includes analyzing the packaging unit that contains the edible materials for one or more of the following: metal levels, weight and optical characteristics, and then sealing one or more of the pods with a lidding material.

According to an exemplary embodiment, based on a purchaser's input each of the following may be selected one or more edible materials and amount thereof, packaging unit, and shipping date. The purchaser's input is stored in and accessed from a database. Additionally, identifying information is added to the lidding material following the sealing. In particular, the identifying information may be printed on the lidding material. The pod or lidding material has one or more of the following identifying information thereon edible material in the pod, amount of edible material in the pod, and indication of number of pods in packaging unit.

Further, a packaging unit is associated with a detectable tag during steps of dispensing and analyzing the edible materials within the pod. The detectable tag includes a radio frequency identification. A packaging unit containing edible material is also analyzed by analytical equipment for metal content, weight, and optical characteristics. The packaging unit advances via a transport system through process stations during steps of dispensing, analyzing, and sealing.

According to an exemplary embodiment of the present disclosure, the method further includes stacking multiple stacking units laterally and vertically. The packaging units may be stacked in varying configuration and adjacent packaging units may be stacked in varying positions. In particular, a first portion of the packaging units may be stacked in an inverted position with respect to a second portion of the packaging units. One or more stacks of packaging units are then transferred to a shipping container which reduces the overall packing size and also prevents damage during shipping.

Additionally, according to an exemplary embodiment of the present disclosure, one or more pods of a packaging unit are formed from materials that comprise a terephthalate composition. The terephthalate composition may be a polyethylene terephthalate. Additionally, the lidding materials is peelable and is a barrier to air and water transmission. The edible materials are equine feed or supplements.

Other aspect of the invention as disclosed infra.

### BRIEF DESCRIPTION OF THE DRAWINGS

The embodiments herein may be better understood by referring to the following description in conjunction with the accompanying drawings in which like reference numerals indicate identically or functionally similar elements, of which:

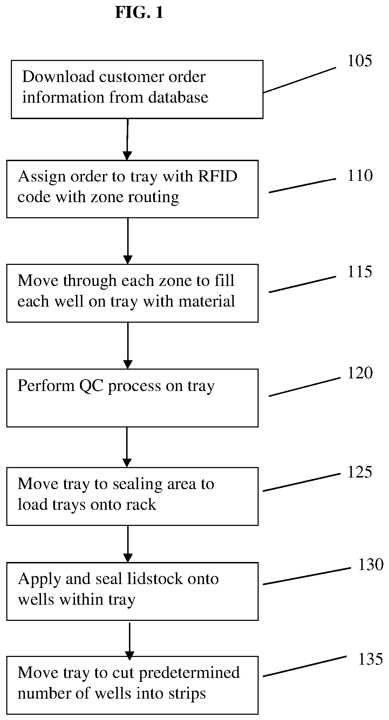

FIG. 1 illustrates the manufacturing process of the packages with edible material according to an exemplary embodiment of the present disclosure.

### DETAILED DESCRIPTION

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

The present disclosure provides an improved manufacturing process for packaging pods containing edible material for various feeds or supplements. The improved process increases production efficiency, produces high quality packaging units, and expands production capacity. The produced packaging units are customizable for different purchasers. Accordingly, the packaging units include labeling printed thereon to provide various identifying information. Although the description herein refers to equine feed and/or supplements, the present disclosure is not limited thereto.

Herein below, a production process will be described with the figures providing details of the filling process, customization process, and the final packaging units. The first step in the production process is receiving and storing the raw material of the edible material that will be filled in the packaging unit. A database is also used to store data related to individual purchaser order including for example, products, wells, doses, tray size, production zone stops, target weights, ship date, expedite status, and the like.

The production process may include a plurality of different production zones. Different orders may require stops at different productions zones and each zone may include multiple individual materials, but the present disclosure is not limited thereto. For example, the production process may include up to about 280 supplements, without being limited thereto. A radio frequency identification (RFID) may be provided on a tray moving through the manufacturing process to provide routing information throughout the production zones as well as how many wells each tray should include. For example, the production track (e.g., conveyer, racetrack) may be organized in 18 zones from start to finish to batch orders of same product and same dose. Various readers are disposed along the track to read the RFID on the tray and route the tray along the conveyer to a corresponding zone based on which material is to be filled in the tray.

For example, as shown in FIG. 1, the process may begin with downloading customer order information from the database, as discussed above (105), the order may be assigned to tray with an RFID code also providing routing instructions for the zones along the conveyer (110), and each tray may be moved through each zone to fill the wells on the tray with materials based on the customer order (115). When a tray arrives at a zone, the barcode or RFID code may be scanned and the corresponding bin associated with the code may light up (or similar type of indicator may be operated) the bin to fill material from the particular zone. When the particular filling zone has completed filling the material, a complete indicator may be selected and the process may move to a next zone on the conveyer. Once a particular tray has moved through the zones associated with the RFID code, a quality control (QC) process may be performed (120).

The quality control process includes at least three different analysis steps such as a metal detection, weight analysis, and optical analysis. Notably, the present disclosure is not limited thereto and may include other quality control analysis steps. Each of these steps further improves the accuracy of the contents filled in the packaging units and decreases packaging errors for customers. As an additional quality control, a technician evaluation process may also be included. In addition to the other quality control steps, this manual verification provides a final check by a person knowledgeable with the metal, weight, and optical readings to confirm accuracy of the automatic quality control process.

Particularly, the metal detection process includes routing the tray under a metal detection sensor to measure the trays for metal (e.g., ferrous and non-ferrous). If the metal detection is within a predetermined range (e.g., preferably within about 5% of a target value), the tray continues to the next quality control step. Conversely, if the metal detection is beyond the predetermined range, an alarm is output for the tray to be removed for further inspection and correction. The system also can be configured to stop the racetrack (conveyor belt) if metal is detected.

Once the tray leaves the metal detection zone, the tray is moved onto a scale for weight analysis. The scale provides the actual weight of the order which is compared with the target weight provided and read from the RFID tag on the tray. The difference between the weights may be acceptable if within a variance range of +8% or -4%. If the difference between the actual weight and the target weight is beyond the predetermined threshold range, an alert is output for a technician to correct the amount within the tray. Otherwise, the tray is routed to the next quality control step of optical analysis.

In particular, in the optical analysis, an image is captured by a camera at the optical analysis zone. The image includes a view of the products and wells within the tray and this information is compared with the data provided by the RFID tag regarding which products are supposed to be included in the tray. For example, the image analysis may include a color comparison and a product consistency comparison, but is not limited thereto. The color comparison may include a red green blue (RGB) color comparison with information stored in a database of previous orders containing the same product. The color comparison may be satisfied if determined that the product is within a predetermined acceptable color range (e.g., between 0 and 255 with a tolerance of 0.1 to 0.3%). The consistency comparison may be used to confirm whether the product is a pellet, powder, crumble, or flakes consistency. For example, the consistency of light and dark areas of the photo may be analyzed and compared with information stored in a database of previous orders containing the same product. Once the quality control process has been completed and the tray is verified to be accurate, the tray may be routed to the sealing room (125).

In particular, the quality control completed trays may be loaded onto racks (e.g., about 40 trays per load) within the sealing area. An additional quality control step may be included in during loading where the loaded racks are compared with an image of an accurately loaded rack. This quality control may be a manual process, but is not limited thereto. Once the trays are loaded, lidstock is applied onto the trays. The lidstock may be made of three layers of material. For example, the lidstock may include a combination of a paper, foil, and poly-seal, but the present disclosure is not limited thereto. Once the trays have been covered with lidstock, the tray may move through a printing process during which the customer order information is printed on a paper layer on top of the lidstock. Alternatively, the lidstock itself may be made of a printable material on which the customer order information may be printed. Thereafter, the trays may be moved into a heated press within the sealing area which irons the lidstock onto the wells of the tray and seals the lidstock thereon.

Next, a predetermined number of wells within the tray may be cut into strips (135). For example, a slitter or cutting device is operated to cut the trays into a particular number of wells or pods in strips. The cutting device may form a strip of seven wells, but the present disclosure is not limited thereto and any number of wells may be included in each strip to accommodate customer preference. In order to move the strips of wells or pods into a packing container, a robotic arms uses suction or similar type of device to pick and place the pod strips in a packing configuration. For example, the completed pod strips may be stacked in varied directions to maximize the space within a shipping container. A flipping device may be operated to rotate the strips to alternate the strips in a row to nest the pods closely together. This stacking method also reduces damages to the pods during transmit to a shipping destination. Each stack of packs may be combined for a particular order and wrapped together. For example, a pile of stacks may be formed of 7 packs wide in 4 layers and thus, the 28 pods may be wrapped together to keep such an order together. Alternately, the strips may be wrapped together in two 2-week bundles where are then stacked and wrapped in a band to be held together. Such a process also facilitates an organization process during movement to a shipping container and also reduces the volume required during shipping thus also resulting in a reduced amount of filler material.

Once the strips are wrapped and stacked, a barcoded shipping label may be applied with relevant shipping information such as ship date, shipping location, as well as other customer order information related to shipping. A manual QC process may finally be executed to ensure accuracy of the packing order. If this QC process determines that additional strips are to be shipped to the same location, the packaged strips may be matched with other order components to improve efficiency.

Accordingly, the production method of packaged edible materials of the present disclosure provides a customized dose of materials in an efficient and cost reducing process.

## Claims

1. A method for producing packaged edible materials comprising:
(a) selecting one or more edible materials and amount thereof based on a purchaser's input;
(b) separately dispensing each of the edible materials to a packaging unit that comprises multiple pods;
(c) analyzing the packaging unit that contains the edible material for two or more of: metal levels, weight and optical characteristics; and thereafter
(d) sealing one or more of the pods with lidding material.

2. The method of claim 1 wherein based on a purchaser's input each of the following are selected: 1) one or more edible materials and amount thereof; 2) packing unit; and 3) shipping date.

3. The method of claim 1 or 2 wherein the purchaser's input is stored in and accessed from a database.

4. The method of any one of claims 1 through 3 wherein identifying information is added to the lidding material following sealing.

5. The method of any one of claims 1 through 4 wherein identifying information is printed on the lidding material.

6. The method of any one of claims 1 through 5 wherein a pod or lidding material thereof has one or more of the following identifying information appearing thereon: 1) edible material in the pod; 2) amount of edible material in the pod; and 3) indication of number of pods in packaging unit.

7. The method of any one of claims 1 through 6 wherein a packaging unit is associated with a detectable tag during steps of dispensing and analyzing.

8. The method of any one of claims 1 through 7 wherein a packaging unit containing edible material is analyzed by analytical equipment for metal content, weight and optical characteristics.

9. The method of any one of claims 1 through 7 wherein a packaging unit is analyzed separately for metal content, weight and optical characteristics.

10. The method of claim 8 or 9 wherein the packaging unit is further inspected following the equipment analysis.

11. The method of any one of claims 1 through 10 wherein the packaging unit advances via a transport system through process stations during steps of dispensing, analyzing and sealing.

12. The method of any one of claims 1 through 11 further comprising stacking multiple packaging units together.

13. The method of claim 12 wherein multiple packaging units are stacked laterally and vertically.

14. The method of any one of claims 1 through 13 wherein the edible materials are equine feed or supplements.

15. A method for producing packaged edible materials comprising:
(a) selecting one or more edible materials and amount thereof based on a purchaser's input;
(b) separately dispensing each of the edible materials to a packaging unit that comprises multiple pods;
(c) analyzing the packaging unit that contains the edible material for one or more of: metal levels and optical characteristics; and thereafter
(d) sealing one or more of the pods with lidding material.

## Patentansprüche

1. Verfahren zur Herstellung von verpackten essbaren Materialien, umfassend:
(a) Auswählen eines oder mehrerer essbarer Materialien und deren Menge auf der Grundlage der Angaben eines Käufers;
(b) getrenntes Abfüllen jedes der essbaren Materialien in eine Verpackungseinheit, die mehrere Behälter umfasst;
(c) Analysieren der Verpackungseinheit, die das essbare Material enthält, hinsichtlich zweier oder mehrerer der Folgenden: Metallgehalt, Gewicht und optische Eigenschaften; und anschließend
(d) Versiegeln eines oder mehrerer der Behälter mit einem Verschlussmaterial.

2. Verfahren nach Anspruch 1, wobei auf der Grundlage der Angaben eines Käufers jeweils eines der Folgenden ausgewählt wird: 1) ein oder mehrere essbare Materialien und deren Menge; 2) Verpackungseinheit; und 3) Versanddatum.

3. Verfahren nach Anspruch 1 oder 2, wobei die Angaben des Käufers in einer Datenbank gespeichert werden und von dort abgerufen werden können.

4. Verfahren nach einem der Ansprüche 1 bis 3, wobei nach dem Versiegeln Identifizierungsinformationen auf das Deckmaterial aufgebracht werden.

5. Verfahren nach einem der Ansprüche 1 bis 4, wobei Identifizierungsinformationen auf das Deckmaterial gedruckt werden.

6. Verfahren nach einem der Ansprüche 1 bis 5, wobei ein Behälter oder ein Deckmaterial davon eine oder mehrere der folgenden Identifizierungsinformationen aufweist: 1) essbares Material in dem Behälter; 2) Menge des essbaren Materials in dem Behälter; und 3) Angabe der Anzahl der Behälter in der Verpackungseinheit.

7. Verfahren nach einem der Ansprüche 1 bis 6, wobei eine Verpackungseinheit während der Schritte des Abfüllens und Analysierens mit einem detektierbaren Tag verbunden ist.

8. Verfahren nach einem der Ansprüche 1 bis 7, wobei eine Verpackungseinheit, die essbares Material enthält, mit Analysegeräten auf Metallgehalt, Gewicht und optische Eigenschaften analysiert wird.

9. Verfahren nach einem der Ansprüche 1 bis 7, bei dem eine Verpackungseinheit separat auf Metallgehalt, Gewicht und optische Eigenschaften analysiert wird.

10. Verfahren nach Anspruch 8 oder 9, wobei die Verpackungseinheit nach der Geräteanalyse weiter geprüft wird.

11. Verfahren nach einem der Ansprüche 1 bis 10, wobei die Verpackungseinheit während der Schritte des Abfüllens, Analysierens und Versiegelns über ein Transportsystem durch Prozessstationen befördert wird.

12. Verfahren nach einem der Ansprüche 1 bis 11, das ferner das Stapeln mehrerer Verpackungseinheiten umfasst.

13. Verfahren nach Anspruch 12, wobei mehrere Verpackungseinheiten seitlich und vertikal gestapelt werden.

14. Verfahren nach einem der Ansprüche 1 bis 13, wobei die essbaren Materialien Pferdefutter oder Nahrungsergänzungsmittel sind.

15. Verfahren zur Herstellung verpackter essbarer Materialien, umfassend:
(a) Auswählen eines oder mehrerer essbarer Materialien und deren Menge auf der Grundlage der Angaben eines Käufers;
(b) getrenntes Abfüllen jedes der essbaren Materialien in eine Verpackungseinheit, die mehrere Behälter umfasst;
(c) Analysieren der Verpackungseinheit, die das essbare Material enthält, auf einen oder mehrere der Folgenden: Metallgehalt und optische Eigenschaften; und anschließend
(d) Versiegeln eines oder mehrerer der Behälter mit einem Verschlussmaterial.

## Revendications

1. Procédé pour produire des produits comestibles emballés, comprenant :
(a) la sélection d'un ou plusieurs produits comestibles et de leur quantité en fonction des indications fournies par l'acheteur;
(b) distribuer séparément chacun des produits comestibles dans une unité d'emballage qui comprend plusieurs compartiments;
(c) analyser l'unité d'emballage contenant le produit comestible pour déterminer au moins deux des caractéristiques suivantes: teneur en métaux, poids et caractéristiques optiques; puis
(d) sceller une ou plusieurs des récipients avec un matériau de recouvrement.

2. Procédé selon la revendication 1, dans lequel, sur la base des informations fournies par l'acheteur, chacun des éléments suivants est sélectionné: 1) un ou plusieurs produits comestibles et leur quantité; 2) l'unité d'emballage; et 3) la date d'expédition.

3. Procédé selon la revendication 1 ou 2, dans lequel les informations fournies par l'acheteur sont stockées dans une base de données et accessibles à partir de celle-ci.

4. Procédé selon l'une quelconque des revendications 1 à 3, dans lequel des informations d'identification sont ajoutées au matériau de recouvrement après scellage.

5. Procédé selon l'une quelconque des revendications 1 à 4, dans lequel des informations d'identification sont imprimées sur le matériau de recouvrement.

6. Procédé selon l'une quelconque des revendications 1 à 5, dans lequel un récipient ou son matériau de recouvrement comporte une ou plusieurs des informations d'identification suivantes: 1) produit comestible dans le récipient; 2) quantité de produit comestible dans le récipient; et 3) indication du nombre des récipients dans l'unité d'emballage.

7. Procédé selon l'une quelconque des revendications 1 à 6, dans lequel une unité d'emballage est associée à une étiquette détectable pendant les étapes de distribution et d'analyse.

8. Procédé selon l'une quelconque des revendications 1 à 7, dans lequel une unité d'emballage contenant un produit comestible est analysée par un équipement d'analyse pour déterminer sa teneur en métal, son poids et ses caractéristiques optiques.

9. Procédé selon l'une quelconque des revendications 1 à 7, dans lequel une unité d'emballage est analysée séparément pour déterminer sa teneur en métal, son poids et ses caractéristiques optiques.

10. Procédé selon la revendication 8 ou 9, dans lequel l'unité d'emballage est en outre inspectée après l'analyse par l'équipement.

11. Procédé selon l'une quelconque des revendications 1 à 10, dans lequel l'unité d'emballage avance via un système de transport à travers des stations de traitement pendant les étapes de distribution, d'analyse et de scellage.

12. Procédé selon l'une quelconque des revendications 1 à 11, comprenant en outre l'empilement de plusieurs unités d'emballage ensemble.

13. Procédé selon la revendication 12, dans lequel plusieurs unités d'emballage sont empilées latéralement et verticalement.

14. Procédé selon l'une quelconque des revendications 1 à 13, dans lequel les produits comestibles sont des aliments ou des compléments alimentaires pour chevaux.

15. Procédé de production des produits comestibles emballées, comprenant :
(a) la sélection d'un ou plusieurs produits comestibles et de leur quantité en fonction des indications fournies par l'acheteur;
(b) distribuer séparément chacun des produits comestibles dans une unité d'emballage comprenant plusieurs récipients;
(c) analyser l'unité d'emballage contenant le produit comestible pour déterminer un ou plusieurs des éléments suivants: teneur en métaux et caractéristiques optiques; puis
(d) sceller une ou plusieurs des récipients avec un matériau de recouvrement.
